# EUROPÄISCHE PATENTSCHRIFT

(11) **EP 0 572 840 B1**
(45) Veröffentlichungstag und Bekanntmachung des Hinweises auf die Patenterteilung: **27.03.1996**
(21) Anmeldenummer: 93107869.5
(22) Anmeldetag: 14.05.1993
(51) Int. Cl.: G07C 5/08

(54) **Einrichtung zur Kurzwegregistrierung für Kraftfahrzeuge**
Device for recording a short distance of motor vehicles
Dispositif pour enregistrer un trajet court de véhicules automobiles

(30) Priorität: 04.06.1992 DE 4218397
(43) Veröffentlichungstag der Anmeldung: 08.12.1993
(73) Patentinhaber: VDO Adolf Schindling AG, D-60326 Frankfurt/Main (DE)
(72) Erfinder: Näther, Horst, Dipl.-Ing., W-7730 Villingen-Schwenningen (DE); Lais, Norbert, Dipl.-Ing. (FH), W-7730 Villingen-Schwenningen (DE)

(56) Entgegenhaltungen:
- EP-A- 0 118 818
- WO-A-88/05196
- FR-A- 2 513 795
- FR-A- 2 574 928
- FR-A- 2 658 341
- GB-A- 2 046 914
- GB-A- 2 055 469

## Beschreibung

Die Erfindung betrifft eine Einrichtung zur Kurzwegregistrierung für Kraftfahrzeuge mit Mitteln zur Geschwindigkeitsmessung mit einer Anordnung zur elektronischen Speicherung der Geschwindigkeitswerte derart, daß sie durch Anzeigen und/oder Drucken eine unmittelbare Beurteilung eines Unfalls oder einer unfallnahen Fahrsituation gestatten.

Eine Kurzweg- oder Restwegregistrierung dient bei Kraftfahrzeugen bekanntlich einer im Vergleich mit Fahrtschreiberdiagrammen höheren Auflösung der letzten vor einem Halt, gegebenenfalls einem kollisionsbedingten Halt des betreffenden Fahrzeugs, zurückgelegten Strecke. Für Geräte dieser Art sind bereits die verschiedensten Aufzeichnungsprinzipien bekannt, beispielsweise solche, die eine unmittelbare Beobachtbarkeit der Aufzeichnungen gestatten, aber auch solche, bei denen in der Regel Geschwindigkeitswerte unter Umständen zusammen mit anderen Daten als Datensätze in einem bestimmten Zeittakt fortlaufend in einen elektronischen Speicher eingeschrieben und die jeweils ältesten Datensätze gelöscht werden.

Bei einem derartigen Gerät dürfen im Hinblick auf eine Geschwindigkeitskontrolle bzw. eine Unfallauswertung bei Stillstand des Fahrzeuges selbstverständlich nur eine begrenzte, für die sichere Stillstandserkennung ausreichende Zeit taktabhängig generierte Geschwindigkeitsnullwerte weitergespeichert werden. Danach sieht ein bekanntes Speicherverfahren vor, einen erneuten Start des Fahrzeugs durch Eintragen der Startzeit in dem betreffenden Speicher zu markieren.

Demgegenüber sind spezielle Unfallregistriergeräte bekannt, bei denen vorzugsweise mittels Beschleunigungssensoren Unfalldaten ermittelt und zeitbasiert relativ kurzzeitig abgespeichert werden, wobei zusätzliche Informationen über beispielsweise Bremsbetätigung, Blinkerfunktion und Beleuchtung als Interpretationshilfen erfaßt werden. Ein derartiges Gerät speichert die Unfalldaten dann fest ab, wenn am Fahrzeug tatsächlich Beschleunigungen wirksam werden, die außerhalb noch möglicher, durch Straßenbeschaffenheit und Fahrdynamik hervorgerufener Beschleunigungen liegen, d. h. bei echten unfallbedingten Stößen. Auf diese Weise kann die Prozessor- und Speicherplatzkapazität auf die reinen Unfallsituationen beschränkt werden.

Die Aufzeichnungen der erstgenannten Gerätegruppe können eine gewisse Unterstützung bei der Unfallaufnahme und Unfallinterpretation bieten, indem der Geschwindigkeitsverlauf bis zum Stillstand des Fahrzeuges vor Ort analysiert und gegebenenfalls erfaßte Zustandsdaten, wie "Bremse betätigt", "Blinker gesetzt" und dergl. berücksichtigt werden können, unabhängig davon, ob an dem Fahrzeug unfallbedingt ein Stoß erfolgt ist oder nicht. Allerdings sind die tatsächliche Reaktion des Fahrers oder Fahrsituationen, die weder zu einem Stillstand des Fahrzeugs, noch zu einer Kollision geführt haben, oder Situationen mit Fahrerflucht nicht erkennbar, weil diese Aufzeichnungen bei der Weiterfahrt des Fahrzeuges überschrieben werden. Die gleiche Aussage läßt sich auch für die ausschließlich Aufprallunfälle registrierenden Geräte treffen, wobei diese zwar eine genaue Analyse der Vor- und Nachgeschichte eines Unfalls ermöglichen, diese Analyse aber nur von Experten durchführbar ist. Außerdem überschreiten die Kosten derartiger Geräte in der Regel die Akzeptanzschwelle für nicht vom Gesetzgeber vorgeschriebene Kontrolleinrichtungen, zumal diese während der gesamten Betriebsdauer eines Fahrzeuges relativ selten oder gar nicht zum Einsatz kommen. Die erstgenannte Gerätegruppe kann demgegenüber wesentlich häufiger, nämlich für Verkehrskontrollen, genutzt werden.

FR -A- 2 574 928 offenbart einen Unfalldatenschreiber mit elektronischer Speicherung von Meßwerten, wobei in der Speicheranordnung wenigstens zwei voneinander unabhängige Speicherzweige mit jeweils mehreren Speicherbereichen vorgesehen sind, und wobei jeder Speicherbereich einen als Ringspeicher betreibbaren Speicherabschnitt und einen als Linearspeicher betreibbaren Speicherabschnitt aufweist. Als Meßwerte sind insbesondere Beschleunigungsmeßwerte genannt, Geschwindigkeitsmeßwerte sind jedoch nicht erwähnt.

EP -A- 0 118 818 offenbart einen Unfalldatenschreiber, wobei die Geschwindigkeit mit Radumdrehungen abtastenden Gebern ermittelt wird. Ergänzend sind Beschleunigungssensoren vorgesehen. Die Geschwindigkeits- und Beschleunigungsdaten werden in einen elektron. Ringspeicher geschrieben und bei Eintreten einer hohen Verzögerung (Unfall) eingefroren, wobei die in einer Nachlaufzeit nach dem Unfall anfallenden Daten ebenfalls gespeichert werden (Folgeunfälle). Erfolgt nach dem Triggerereignis keine Verminderung der Geschwindigkeit bis zum Halt, wird Unfallflucht angenommen und die weitere Datenspeicherung im Ringspeicher wird mit einer um einen Offset erhöhten Startadresse vorgenommen, so daß die Unfalldaten nicht überschrieben werden.

Der Erfindung lag somit die Aufgabe zugrunde, eine Einrichtung zur Kurzwegregistrierung für Kraftfahrzeuge zu schaffen, die mit kraftfahrzeugverträglichem Aufwand verwirklicht werden kann und über eine Geschwindigkeitsaufzeichnung an sich hinausgehende Aufzeichnungen liefert, die auch ohne Datenverarbeitungsaufwand und ohne Spezialkenntnisse interpretierbar sind.

Die gefundene Lösung ist im Anspruch 1 angegeben. Die Unteransprüche beschreiben Ausführungsbeispiele und vorteilhafte Weiterbildungen der Erfindung.

Die erfindungsgemäße Einrichtung löst die gestellte Aufgabe und bietet den Vorteil, daß die angestrebte Aussage ausschließlich mit Signalen von in Kraftfahrzeugen ohnehin vorhandenen Weggebern erzielbar ist. D. h. die Lösung der gestellten Aufgabe läßt sich nicht nur äußerst kostengünstig realisieren, weil auf einen hohen technischen Aufwand, beispielsweise Beschleunigungs- und Winkelsensoren, verzichtet wird, sie ist auch, da eine bewährte Technik mitgenutzt wird, funktionssicher.

Von Bedeutung ist ferner, daß der Einbau der gefundenen Einrichtung als eigenständiges Gerät insofern unproblematisch ist als ein derartiges Gerät wenig Raum beansprucht, nicht zwingend im Bereich des Armaturenbretts angeordnet werden muß und keine Lageabhängigkeit aufweist. Insofern sind auch die Voraussetzungen für einen freiwilligen Einbau eines derartigen Gerätes gegeben. Vorteilhaft ist auch, daß die Einrichtung in einfacher Weise insbesondere in die verschiedensten Fahrzeuggeräte, die wegabhängig generierte Impulse verarbeiten, integrierbar ist. Da der Speicherplatzbedarf infolge des Ausblendens von Zeitfenstern gering ist, kann auch eine funktionelle Integration der Einrichtung, mit anderen Worten eine Benutzung redundanter Speicher- und Prozessorkapazität in elektronisch gesteuerten Anzeige- und/oder Registriergeräten vorgesehen werden. Erwähnenswert ist ferner, daß die Einrichtung im Hinblick auf Unfallaufnahmen durch die Polizei, auf Verkehrskontrollen und auf Fahrerfluchtsituationen eine bedarfsoptimierte Aussage und Interpretationshilfe bietet, die aufgrund der Beschränkung auf nur eine Meßgröße, nämlich die Geschwindigkeit, von der die Beschleunigung rechnerisch abgeleitet wird, weitgehend unstrittig ist.

Mit der parallelen Speicherung gleicher Geschwindigkeitsmeßwerte in jeweils gleichen Speicherbereichen, die als ein für das Festhalten einer Vor- und einer Nachgeschichte eines Ereignisses ausreichendes Zeitfenster ausgelegt sind, dem Vorsehen mehrerer derartiger Speicherbereiche in den jeweiligen parallelen Speicherzweigen und mit den gewählten Festspeicherkriterien v = 0 und a > Verzögerungsschwellwert X, die ein Verlassen des aktuellen Speicherbereichs bewirken, kann, da zusätzlich wenigstens ein Relativwert für die momentane Uhrzeit und gegebenenfalls der km-Stand beim Auftreten eines der Festspeicherkriterien festgehalten werden, eine Vielzahl von Fahrsituationen erfaßt und nachträglich sichtbar gemacht werden. Dabei ist infolge der Vielzahl der Speicherbereiche eine Manipulation durch Überschreiben, d. h. durch bewußtes Herbeiführen von Fahrsituationen, die ein Weiterspeichern in einem neuen Speicherbereich verursachen, erheblich erschwert.

Im Falle eines Unfalls, der von der Polizei an Ort und Stelle aufgenommen wird, liefern die zuletzt abgeschlossenen Speicherbereiche ergänzende Informationen insbesondere über den Geschwindigkeitsverlauf vor dem Ereignis, aber auch über die Reaktion des Fahrers bezüglich seines Bremsverhaltens. Es ist somit vor Ort eine Aussage auch darüber zu erhalten, ob ein Fahrer, der in den betreffenden Unfall verwickelt ist, eine bestehende Richtgeschwindigkeit eingehalten hatte oder nicht, bzw. ob er bei einer über der Richtgeschwindigkeit gelegenen Ausgangsgeschwindigkeit eine Notbremsung hat vornehmen müssen. Zur Vermeidung von Diskussionen bei der Interpretation des Geschwindigkeitsverlaufs ist es in diesen Zusammenhang, d. h. bei überschrittener Richtgeschwindigkeit, denkbar, die aktuelle Geschwindigkeitskurve mit einem für eine Schuldzuweisung relevanten Gechwindigkeitsprofil zu vergleichen und lediglich eine Ja/Nein-Aussage anzuzeigen und/oder auszudrucken.

Die Ausgabe der Speicherinhalte kann mittels eines im Polizeifahrzeug installierten, hochauflösenden, graphischen oder auch eines numerischen Displays und durch einen Ausdruck erfolgen, wobei insbesondere die Druckeinrichtung sowohl im Polizeifahrzeug vorhanden als auch der erfassenden Einrichtung zugeordnet sein kann.

Bei Verkehrskontrollen, insbesondere bei Unfallfluchtrecherchen können die älteren, noch nicht überschriebenen Speicherbereiche Aufschluß geben, ob zu einem bestimmten Zeitpunkt ein Halt, eine starke Bremsung oder bei zusätzlicher Verwendung eines oder mehrerer Stoßsensoren ein Stoß auf das Fahrzeug eingewirkt haben. Mittels Stoßsensoren, die allerdings eine Verkabelung benötigen, lassen sich Fahrerfluchtsituationen transparent machen, bei denen weitergefahren wurde, ohne daß zuvor mit einer den festgesetzten Verzögerungsschwellwert erreichenden Bremskraft gebremst worden ist, beispielsweise nach einem Touchieren eines geparkten Fahrzeugs oder nach einem Auffahren auf ein Fahrzeug.

Im folgenden sei ein bevorzugtes Ausführungsbeispiel der Erfindung anhand der beigefügten Zeichnungen näher erläutert. Es zeigen
Fig. 1 ein in einen integrierten Baustein hineinprojiziertes Blockschaltbild der erfindungsgemäßen Einrichtung sowie der zugeordneten Peripheriegeräte,
Fig. 2 eine schematische Darstellung der Speicherbereichsaufteilung und Speicherverwaltung,
Fig. 3 ein Flußdiagramm des Funktionsablaufs in einem Speicherbereich eines Speicherzweiges,
Fig. 4 ein Ausdruckbeispiel eines abgeschlossenen Speicherzyklus, wobei es sich nicht um den letzten Speicherzyklus handelt und
Fig. 5 A bis G Geschwindigkeits-/Zeit-Diagramme verschiedener Verkehrssituationen, wie sie in Speicherbereichen des einen und/oder des anderen Speicherzweiges erfaßt sein können.

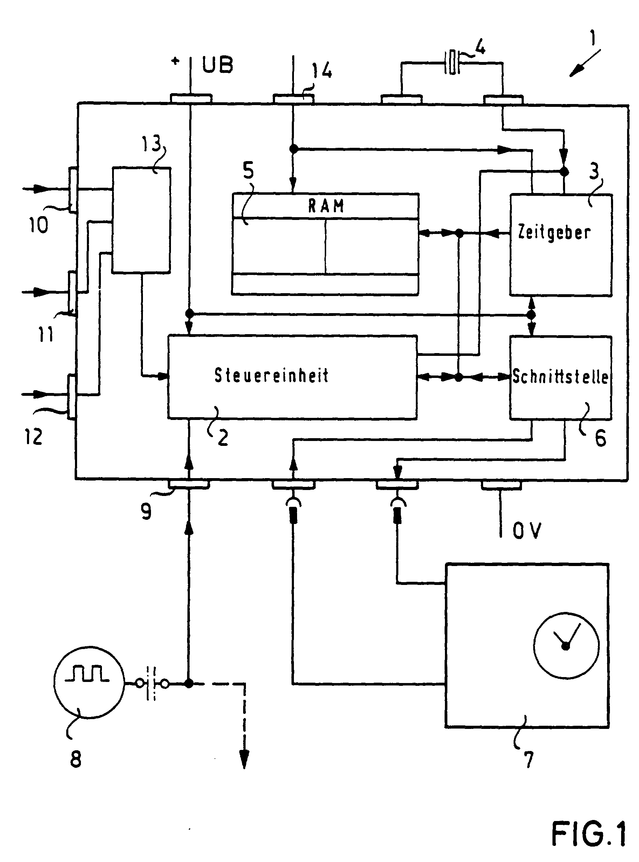

Das Blockschaltbild Fig. 1 zeigt einen Baustein 1, in welchem die über nicht bezeichnete Steuerleitungen und ein Bussystem miteinander kommunizierenden Funktionselemente der Einrichtung integriert sind. Im einzelnen handelt es sich um eine Steuereinheit 2, die für den Anwendungszweck als einfache logische Schaltung, aber auch als Prozessor ausgebildet sein kann, in dessen ROM das Systemprogramm geladen ist, einen Zeitgeber 3, der mit einem extern zugeordneten Schwingquarz 4 gekoppelt und nicht notwendigerweise als Uhrzeit-Datum-Geber ausgebildet ist, eine Speicheranordnung, d. h. ein RAM 5, in welchem die Festspeicherung von Geschwindigkeitswerten nach unterschiedlich definierten Kriterien in mehreren getrennten Speicherzweigen erfolgt, sowie eine Schnittstelle 6 für den Anschluß eines fahrzeugunabhängigen, gegebenenfalls tragbaren und mit einem geeigneten Display und/oder Drucker ausgerüsteten Kontrollgerät 7, über welches ein Nachkalibrieren der erstmalig vorgenommenen Weganpassung erfolgen kann und Datum und aktuelle Uhrzeit zur Berechnung eines Ereigniszeitpunktes in die Kurzwegregistriereinrichtung eingebbar sind.

Mit 8 ist ein wegabhängige Impulse liefernder Geber bezeichnet, der üblicherweise in dem betreffenden Fahrzeug, in welchem die erfindungsgemäße Einrichtung vorgesehen werden soll, für die Geschwindigkeitsmessung und/oder Streckenzählung bereits vorhanden ist. Zweckmäßig ist es, optional außer dem Eingang 9 für den Wegimpulsgeber 8 weitere Eingänge 10, 11, 12 und eine geeignete Schnittstellenschaltung 13 für beispielsweise einen oder mehrere Stoßsensoren, einen Drehzahlgeber, um z. B. Fahren im unpassenden Gang feststellen zu können, sowie statische Geber, wie einen Lenkwinkelgeber und einen Bremskontakt, bereitzustellen, so daß zusätzliche und bei einer Unfallaufnahme oder Verkehrskontrolle nicht ohne weiteres ermittelbare Daten wahlweise erfaßbar sind. Über den Anschlußkontakt 14 ist eine Pufferbatterie extern zugeordnet.

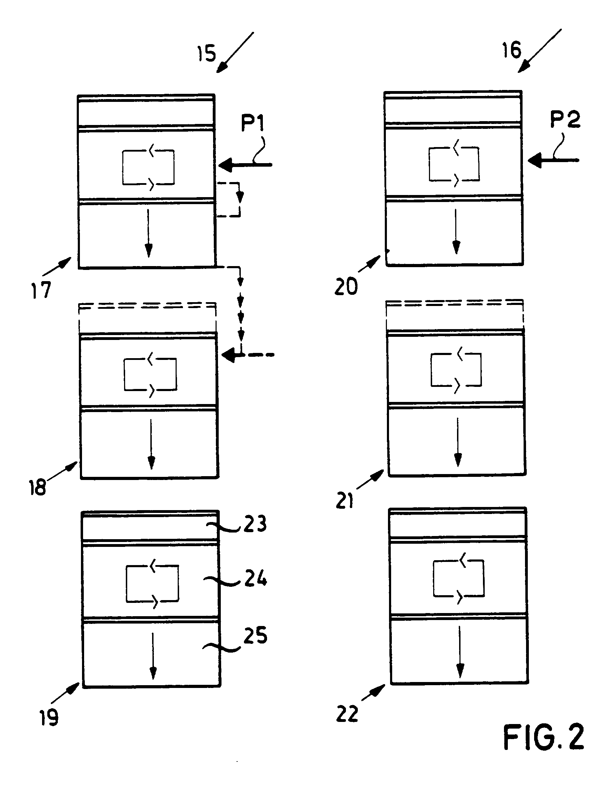

Die schematische Darstellung Fig. 2 zeigt die im RAM 5, das vorzugsweise als CMOS RAM ausgebildet ist und in Zukunft durch ein EEPROM ersetzbar sein dürfte und somit eine Pufferung entfallen könnte, getroffene Aufteilung in wenigstens zwei Speicherzweige 15, 16 und innerhalb der Speicherzweige 15, 16 in mehrere Speicherbereiche 17, 18 und 19 bzw. 20, 21 und 22, wobei die Anzahl der für die gewählten Festspeicherkriterien vorgesehenen Speicherzweige, insbesondere aber die Anzahl der Speicherbereiche innerhalb der Speicherzweige in Fig. 2 beliebig erweiterbar sind. Das Einrichten von drei Speicherbereichen in jedem Speicherzweig hat zum Ziel, daß wenigstens zwei Unfälle oder unfallnahe Situationen mit Sicherheit vollständig erfaßbar sind. In jedem Speicherbereich ist - stellvertretend sei dies im Speicherbereich 19 näher bezeichnet - ein Speicherabschnitt 23 für Identifizierungsdaten, ein Speicherabschnitt 24, welcher als Ringspeicher organisiert ist und in welchen Geschwindigkeitswerte vor dem Eintreten des für den betreffenden Speicherzweig gewählten Festspeicherkriteriums fortlaufend eingeschrieben werden, und ein Speicherabschnitt 25, welcher als Linearspeicher betrieben wird und in welchem Geschwindigkeitswerte nach dem betreffenden Ereignis für eine bestimmte Zeit weitergespeichert werden, eingerichtet. Dabei ist für die Ringspeicher eine Speichertiefe von 1 Minute festgelegt, ebenso für die jeweils nachgeschalteten Linearspeicher, so daß die Vor- und Nachgeschichte eines Ereignisses innerhalb eines Zeitfensters von 2 Minuten sichtbar gemacht werden kann.

Es sei nochmals erwähnt, daß vorgesehen ist, daß in beiden Speicherzweigen 15 und 16 völlig unabhängig voneinander zeitgleich digitale Geschwindigkeitswerte beispielsweise im Halbsekundentakt gespeichert und als Festspeicherkriterium, bei dessen Eintreten der jeweilige Ringspeicher verlassen wird, für den einen Speicherzweig 15 v = 0, für den anderen Speicherzweig 16 a > Verzögerungsschwellwert X, beispielsweise 5,5 m/sec , gewählt worden ist.

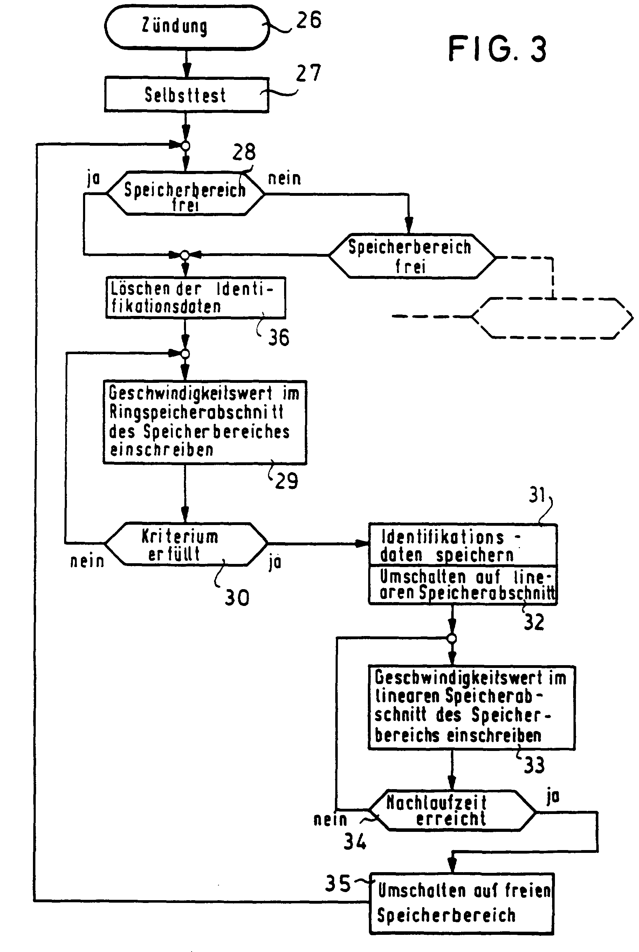

Der Ablauf der Speicherung der aus den Geberimpulsen gemessenen Geschwindigkeitswerte sei im folgenden anhand des für die jeweiligen Speicherbereiche beider Speicherzweige 15 und 16 zutreffenden Flußdiagramms Fig. 3 erläutert.

Nach dem Einschalten der Zündung (26) des betreffenden Fahrzeuges kann die Steuereinheit 2 programmgemäß zunächst einen Selbsttest (27) vornehmen, bei dem auch die angeschlossenen Geber überprüft werden und fragt dann ab (28), welcher Ringspeicher der Speicherbereiche 17, 18, 19 und 20, 21, 22 frei ist bzw. der jeweils erste 17 oder 20 überschrieben werden muß, weil der jeweils letzte 19 oder 22 der Speicherzweige 15 bzw. 16 belegt ist. Beim Auftreten von aus den vom Geber 8 gelieferten Wegimpulsen errechneten Geschwindigkeitswerten werden diese dann solange über die Adreßpointer P1 und P2 in die betreffenden Ringspeicher eingeschrieben (29), bis ein Festspeicherkriterium erfüllt ist (30), d. h. für den Speicherzweig 15 v = 0 erkannt und für den Speicherzweig 16 a > 5,5 m/sec errechnet worden ist. Beim Eintreten eines derartigen Ereignisses erfolgen in dem jeweiligen Speicherabschnitt 23 Einträge (31) des letzten Standes des umlaufenden Adreßpointers P1 bzw. P2, des Zeitpunktes des Ereignisses, des Km-Standes und gegebenenfalls einer Fahrzeugidentifikation.

Nachfolgend wird auf den nachgeschalteten Speicherabschnitt umgeschaltet (32) und dieser mit Geschwindigkeitsnullwerten beschrieben (33) solange das Fahrzeug steht, oder es werden, wenn das Fahrzeug sich wieder in Bewegung setzt, Geschwindigkeitswerte abgespeichert. Wie bereits erwähnt, ist für den jeweiligen Speicherabschnitt 25 eine Tiefe von 1 Min. vorgesehen. Ist diese Nachlaufzeit erreicht (34), wird als Folge eines erfüllten Festspeicherkriteriums (30) der betreffende Speicherbereich 17, 18 oder 19 bzw. 20, 21 oder 22 verlassen und bei Vorliegen von Geschwindigkeitswerten der Ringspeicher des nächst folgenden Speicherbereichs angesteuert (35). Gleichzeitig werden die Daten des diesem Speicherbereich zugeordneten Speicherabschnitts für die Identifikationsdaten gelöscht (36).

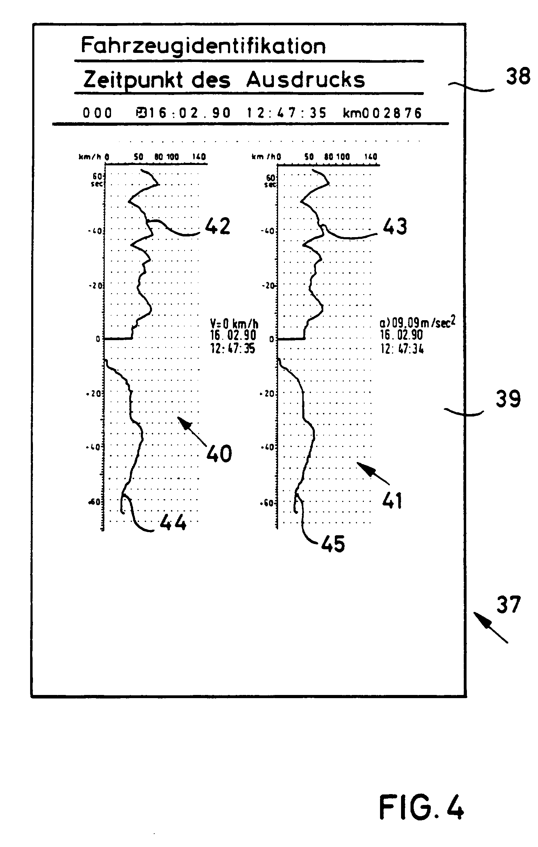

Mit der Fig. 4 ist ein Ausdruckbeispiel dargestellt, und zwar für einen blattförmigen Druckträger 37. Im Kopfbereich 38 des Druckträgers 37 sind Identifikationsdaten des Fahrzeuges, Datum und Uhrzeit des Ausdrucks, eine Kennzeichnung der Speicherbereiche, Datum und Uhrzeit des Ereignisses sowie der Stand des Km-Zählers ausgedruckt. Im Feld 39 des Druckträgers 37 erfolgt der parallele Ausdruck von Geschwindigkeitsdiagrammen der Speicherzweige 15 und 16, die infolge eines Halts oder einer starken Bremsung festgespeichert worden sind.

Im Falle der Fig. 4 ist, da die Geschwindigkeitsdiagramme nicht mit v = 0 abschließen, der Inhalt von Speicherbereichen dargestellt, die einen älteren Speicherzyklus enthalten, der während einer Fahrt nach Ablauf der Nachlaufzeit abgebrochen worden ist. Definitionsgemäß ist das in einem Speicherbereich des Speicherzweigs 15 abgelegte Geschwindigkeitsdiagramm 40 identisch mit dem in einem Speicherbereich des Speicherzweiges 16 abgelegten Geschwindigkeitsdiagramm 41, wenn, wie in diesem Falle, einem Halt des Fahrzeugs (v = 0) eine Bremsung mit einer Verzögerung a > 5,5 m/sec vorausgegangen war. Hiermit waren beide Festspeicherkriterien erfüllt. Die Diagrammteile 42 und 43 zeigen die jeweiligen Ringspeicherinhalte, die Diagrammteile 44 und 45 die Inhalte der nachfolgenden Linearspeicher der betreffenden Speicherbereiche. Wie aus der Fig. 4 ferner ersichtlich ist, sind den Geschwindigkeitsdiagrammen 40 und 41 die wichtigsten Daten des Ereignisses, beispielsweise auch der absolute Wert der Bremsverzögerung, die üblicherweise zeitlich vor dem Stillstand des Fahrzeuges einsetzen muß, alphanumerisch zugeordnet.

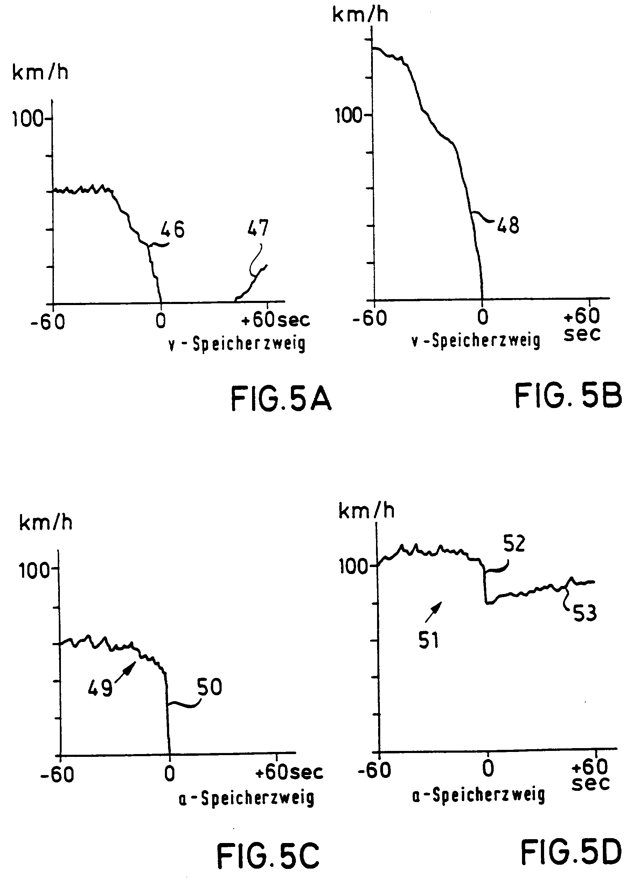

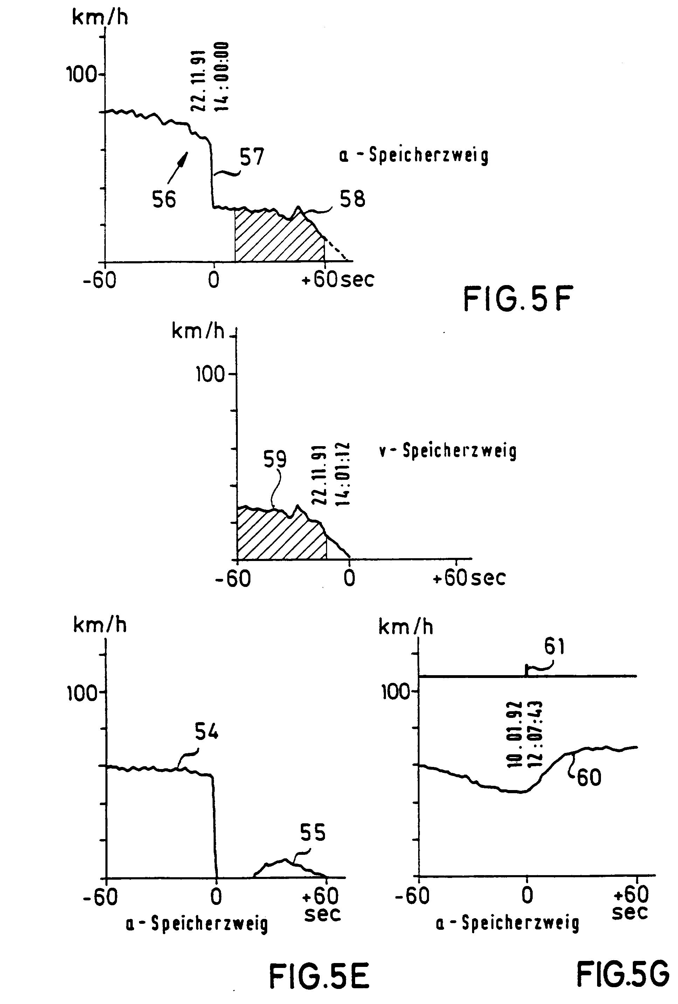

Die Geschwindigkeits-/Zeit-Diagramme Fig. 5 A bis G zeigen im Gegensatz zu Fig. 4 Darstellungsbeispiele von jeweils einer anderen Verkehrssituation, d. h. sie sind jeweils für sich zu betrachten. Der Einfachheit halber sind die wichtigsten Ereignisdaten, Datum und Uhrzeit, lediglich bei den Fig. 5 F und 5 G eingetragen.

Die Fig. 5 A zeigt den Inhalt eines Speicherbereichs des Speicherzweiges 15 mit dem Festspeicherkriterium v = 0. Dabei kann es sich um ein normales Anhalten an einer Ampel (Diagrammteil 46) und nachfolgender Weiterfahrt (Diagrammteil 47) handeln. Anhalten und Weiterfahren kann aber auch Unfallflucht sein. Aufgrund des Geschwindigkeitsdiagramms und der dem Kriterium v = 0 zugeordneten, alphanumerischen Daten läßt sich bei einer Verkehrskontrolle nachträglich aber feststellen, welches Fahrverhalten zu einem bestimmten Zeitpunkt gegeben war.

Das Diagramm 48 in Fig. 5 B stellt ebenfalls einen Inhalt eines Speicherbereichs des Speicherzweiges 15 dar und zeigt, daß das betreffende Fahrzeug aus einer relativ hohen Geschwindigkeit verzögert und zum Stillstand gebracht worden ist, und zwar ohne daß eine Notbremsung erfolgte.

Für das in Fig. 5 C dargestellte Diagramm 49 darf aufgrund des steilen Abfalls des Diagrammteils 50 angenommen werden, daß eine Voll- oder Notbremsung erfolgt ist und bei einem nicht mit ABS ausgerüsteten Fahrzeug Bremsspuren vorhanden sind. Jedenfalls ist die Abbremsung des Fahrzeugs derart erfolgt, daß das Kriterium a > beispielsweise 5,5 m/sec erfüllt war und somit ein Festspeichern der Geschwindigkeitswerte auch in einem Speicherbereich des Speicherzweiges 16 vorgenommen worden ist.

Die Fig. 5 D zeigt ebenfalls ein Diagramm 51, dessen Geschwindigkeitswerte in einem Speicherbereich des Speicherzweiges 16 festgespeichert worden sind. D. h. das Kriterium a > X war zum Zeitpunkt 0 erfüllt. Das betreffende Fahrzeug kam nach einer starken Verzögerung (Diagrammteil 52) jedoch nicht zum Stillstand (Diagrammteil 53). Denkbar ist, daß das Fahrzeug ausscherte, um einen Unfall zu vermeiden.

Die Fig. 5 E zeigt ein Geschwindigkeitsdiagramm aus einem Speicherbereich des Speicherzweiges 16, d. h. das Kriterium a > X war erfüllt. Aus dem Diagrammteil 54 ist ersichtlich, daß das Fahrzeug aus einer relativ gleichmäßigen Geschwindigkeit praktisch ungebremst oder mit blockierenden Rädern zum Stillstand kam, sich also ein Unfall ereignete und daß das Fahrzeug (Digrammteil 55) nach einiger Zeit vom Unfallort durch Schieben oder aus eigener Kraft entfernt worden ist.

Mit der Fig. 5 F sollen Speicherungen für eine Verkehrssituation gegenübergestellt sein, bei der nach einer starken Verzögerung nicht unmittelbar ein Halt des Fahrzeugs erfolgt, sondern erst einige Zeit später. Diese Zeitverschiebung ergibt infolge der zweifachen Speicherung der Geschwindigkeitswerte einerseits im Speicherzweig 16, andererseits im Speicherzweig 15 eine Dehnung des Zeitfensters für die Geschwindigkeitsaufzeichnung. Im einzelnen zeigt das Diagramm 56 eine starke Verzögerung im Diagrammabschnitt 57 sowie ein Weiterfahren des Fahrzeuges (Diagranmabschnitt 58). Erst 12 Sekunden außerhalb des Zeitfensters des betreffenden Speicherbereichs im Speicherzweig 16 kommt das Fahrzeug zum Stehen. Dieser Halt bestimmt in dem aktuellen Speicherbereich des Speicherzweiges 15 ein Festspeichern des betreffenden Ringspeicherinhalts, welcher durch das Diagramm 59 sichtbar gemacht ist.

Mit der Fig. 5 G ist eine Verkehrssituation aufgezeichnet, bei der weder ein Halt des Fahrzeuges, noch eine das festgesetzte Verzögerungskriterium erreichende Bremsung erfolgte. Mittels eines oder mehrerer Stoßsensoren ist jedoch ermittelt worden, daß an dem Fahrzeug während der Fahrt ein Stoß erfolgt ist. Wegen der geringen Überschreibungshäufigkeit erfolgt ein durch Stöße ausgelöstes Festspeichern der Geschwindigkeitswerte und der zusätzlichen Ereignisdaten zweckmäßigerweise im Speicherbereich 16. Wie aus der Fig. 5 G ersichtlich ist, zeigt das Zeitfenster ein Geschwindigkeitsdiagramm 60, welches weder eine markante Verzögerung, noch ein Anhalten erkennen läßt. Im Gegenteil, nach dem Ereignis erfolgt eine Zunahme der Geschwindigkeit, was typisch ist für Unfallfluchtsituationen. Das Ereignis, in diesem Falle ein Stoß, wird zusätzlich optisch durch eine Markierung 61 und das Ausdrucken wenigstens der Datum- und Uhrzeitdaten verdeutlicht. Grundsätzlich würde die Tatsache, daß ein Festspeichern erfolgt ist und somit überhaupt ein Diagramm aufgezeichnet werden kann, als Nachweis für ein Stoßereignis oder eines der beiden anderen Ereignisse v = 0 bzw. a > X ausreichen.

## Patentansprüche

1. Einrichtung zur Kurzwegregistrierung für Kraftfahrzeuge mit Mitteln zur Geschwindigkeitsmessung und mit einer Anordnung (5) zur elektronischen Speicherung der Geschwindigkeitsmeßwerte derart, daß sie durch Anzeigen und/oder Drucken eine unmittelbare Beurteilung eines Unfalls oder einer unfallnahen Fahrsituation gestatten,
dadurch gekennzeichnet,
daß in der Speicheranordnung (5) wenigstens zwei voneinander unabhängige Speicherzweige (15, 16) mit jeweils mehreren Speicherbereichen (17, 18, 19 und 20, 21, 22) vorgesehen sind,
daß jeder Speicherbereich (17, 18, 19 und 20, 21, 22) einen als Ringspeicher betreibbaren Speicherabschnitt (24) und einen als Linearspeicher betreibbaren Speicherabschnitt (25) aufweist,
daß gleichzeitig in zwei Speicherzweige (15, 16) in einem für die gewünschte Auflösung erforderlichen Takt der jeweils gemessene Geschwindigkeitswert eingeschrieben wird und daß ein Verlassen eines Ringspeichers (24) und ein Weiterspeichern im nachgeordneten Linearspeicher (25) im Falle des einen Speicherzweiges (15) bei Stillstand des Fahrzeuges, im Falle des anderen Speicherzweiges (16) beim Überschreiten von festgelegten, durch Bremsen oder durch Stoß verursachten Verzögerungswerten erfolgt.

2. Einrichtung nach Anspruch 1,
dadurch gekennzeichnet,
daß ein die Speicherung steuernder Prozessor (2) bei Vorliegen der Festspeicherkriterien v = 0 und/oder a > Verzögerungsschwellwert X das Einschreiben wenigstens eines Relativwertes für Datum und aktuelle Uhrzeit vornimmt.

3. Einrichtung zur Kurzwegregistrierung nach Anspruch 1,
dadurch gekennzeichnet,
daß die Speicheranordnung (5) zusammen mit dem Prozessor (2), einem Zeitgeber (3) und einer geeigneten Schnittstellenschaltung (6) als eine Baueinheit ausgebildet ist und
daß die Baueinheit in ein wegabhängige Impulse verarbeitendes Fahrzeuggerät einbaubar ist, an welchem Vorkehrungen zur Abfrage der Kurzwegregistriereinrichtung getroffen sind.

4. Einrichtung zur Kurzwegregistrierung nach Anspruch 3,
dadurch gekennzeichnet,
daß die Baueinheit in die Leitungsverbindung zwischen einem wegabhängige Impulse verarbeitenden Fahrzeuggerät und dem diesem zugeordneten Wegimpulsgeber einbindbar ist.

5. Einrichtung zur Kurzwegregistrierung nach Anspruch 3,
dadurch gekennzeichnet,
daß die Baueinheit als Baustein (1) mit integrierter Schaltung ausgebildet ist.

6. Einrichtung zur Kurzwegregistrierung nach Anspruch 1,
dadurch gekennzeichnet,
daß zur sichtbaren Darstellung der gespeicherten Geschwindigkeitswerte eine Druckvorrichtung vorgesehen ist und
daß als Aufzeichnungsträger ein blattförmiger Druckträger (37) Anwendung findet, welcher durch einen Schlitz in die Druckvorrichtung eingeb- und entnehmbar ist.

7. Einrichtung zur Kurzwegregistrierung nach Anspruch 1 und 6,
dadurch gekennzeichnet,
daß die Inhalte der beiden Speicherzweige (15, 16) parallel nebeneinander als Geschwindigkeitsdiagramme ausgedruckt werden und
daß bei Vorliegen der Festspeicherkriterien v = 0 und/oder a > Verzögerungsschwellwert X im jeweiligen Diagramm ein Abdruck wenigstens des Datums und der Uhrzeit erfolgt.

8. Einrichtung zur Kurzwegregistrierung nach Anspruch 1,
gekennzeichnet durch
ein fahrzeugunabhängiges Kontrollgerät, in welchem die Druckvorrichtung und/oder ein Display, ein Uhrzeit-Datumrechner und Mittel zur fahrzeugspezifischen Weganpassung (Impulszahl/Meter) vorgesehen sind.

9. Einrichtung zur Kurzwegregistrierung nach Anspruch 1,
dadurch gekennzeichnet,
daß die Speicheranordnung in einem mit einer Druckvorrichtung nach Anspruch 4 ausgerüsteten Fahrtschreiber integriert ist.

## Claims

1. Device for registering short distances for motor vehicles with means for measuring speed and with an arrangement (5) for electronic storage of the speed values in such a way that by display and/or by printout it allows immediate assessment of an accident or of a driving situation close to an accident, characterised in that in the storage arrangement (5) there are provided at least two store branches (15, 16) which are independent of one another and each have a plurality of storage areas (17, 18, 19 and 20, 21, 22), that each storage area (17, 18, 19 and 20, 21, 22) has a storage section (24) which can be operated as a ring store and a storage section (25) which can be operated as a linear store, that the measured speed value in each case is entered simultaneously into two store branches (15, 16) in a cycle necessary for the desired definition, and that departure from a ring store (24) and further storage in the subsequent linear store (25) occurs in the case of one store branch (15) upon stopping of the vehicle, in the case of the other store branch (16) when fixed deceleration values caused by braking or by shock are exceeded.

2. Device according to Claim 1, characterised in that a processor (2) which controls the storage carries out the entry at least of a relative value for date and current time of day when the permanent storage criteria v = 0 and/or a > deceleration threshold value X occur.

3. Device for registering short distances according to Claim 1, characterised in that the storage arrangement (5) together with the processor (2), a clock (3) and a suitable interface circuit (6) is constructed as one structural unit and that the structural unit can be installed in a vehicle instrument which processes pulses depending upon distance and on which precautions are taken for enquiring of the device for registering short distances.

4. Device for registering short distances according to Claim 3, characterised in that the structural unit can be linked into the line connection between a vehicle instrument which processes pulses depending upon distance and the distance pulse generator co-ordinated therewith.

5. Device for registering short distances according to Claim 3, characterised in that the structural unit is constructed as a component (1) with integrated circuit.

6. Device for registering short distances according to Claim 1, characterised in that a printing device is provided for visual representation of the stored speed values and that as recording medium a print carrier (37) in sheet form is used, which can be inserted into and removed from the printing device through a slot.

7. Device for registering short distances according to Claim 1 and 6, characterised in that the contents of the two store branches (15, 16) are printed out parallel alongside one another as speed diagrams and that when the permanent storage criteria v = 0 and/or a > deceleration threshold value X occur an imprint of at least the date and the time of day is made in the particular diagram.

8. Device for registering short distances according to Claim 1, characterised by a monitoring device which is independent of the vehicle and in which are provided the printing device and/or a display, a time/date calculator and means for vehicle-specific distance adaptation (pulse count/meter).

9. Device for registering short distances according to Claim 1, characterised in that the storage arrangement is integrated into a tachograph equipped with a printing device according to Claim 4.

## Revendications

1. Dispositif destiné à l'enregistrement de courts trajets pour des véhicules automobiles avec des moyens de mesure de vitesse et avec un arrangement (5) pour la mémorisation électronique des paramètres de vitesse, de telle sorte que ces derniers permettent, par affichage et/ou impression, une interprétation immédiate d'un accident ou d'une situation de circulation quasi accidentelle,
caractérisé par le fait
que dans l'arrangement de mémoire (5) sont prévues, au moins, deux branches de mémoire (15, 16) indépendantes l'une de l'autre avec respectivement plusieurs zones de mémoire (17, 18, 19 et 20, 21, 22),
que chaque zone de mémoire (17, 18, 19 et 20, 21, 22) présente un segment de mémoire (24) pouvant être exploité comme mémoire annulaire et un segment de mémoire (25) pouvant être exploité comme mémoire linéaire,
que le paramètre de vitesse respectivement mesuré est simultanément inscrit dans deux branches de mémoire (15, 16) à une cadence nécessaire pour la résolution désirée et qu'un abandon d'une mémoire annulaire (24) et une poursuite de la mémorisation dans la mémoire linéaire (25) couplée en aval ont lieux, en ce qui concerne l'une des branches de mémoire (15), en cas d'immobilisation du véhicule, en ce qui concerne l'autre branche de mémoire (16), en cas de dépassement de paramètres de décélération déterminés causés par freinage ou par collision.

2. Dispositif selon la revendication 1,
caractérisé par le fait
qu'un processeur (2) commandant la mémorisation effectue, en cas d'existence des critères de sauvegarde v = 0 et/ou a > paramètre de seuil de décélération X, l'inscription d'au moins une valeur relative pour la date et l'heure actuelle.

3. Dispositif destiné à l'enregistrement de courts trajets selon la revendication 1,
caractérisé par le fait
que l'arrangement de mémoire (5) conjointement avec le processeur (2), un générateur de signaux d'horloge (3) et un circuit d'interface (6) approprié est réalisé comme un sous-ensemble et
que ledit sous-ensemble peut être intégré dans un appareil d'équipement de véhicule traitant des impulsions en fonction de la distance parcourue sur lequel des dispositions ont été prises pour l'interrogation du dispositif d'enregistrement de courts trajets.

4. Dispositif destiné à l'enregistrement de courts trajets selon la revendication 3,
caractérisé par le fait
que le sous-ensemble peut être inséré dans la liaison câblée entre un appareil d'équipement de véhicule traitant des impulsions en fonction de la distance parcourue et le générateur d'impulsions de distance associé à ce dernier.

5. Dispositif destiné à l'enregistrement de courts trajets selon la revendication 3,
caractérisé par le fait
que le sous-ensemble est réalisé comme composant (1) avec circuit intégré.

6. Dispositif destiné à l'enregistrement de courts trajets selon la revendication 1,
caractérisé par le fait
que pour la visualisation des paramètres de vitesse mémorisés est prévue une imprimante et
que comme support d'enregistrement est utilisé un support
d'impression en forme de feuille (37) qui peut être introduit et prélevé par une fente dans le dispositif d'impression.

7. Dispositif destiné à l'enregistrement de courts trajets selon l'une quelconque des revendications 1 et 6,
caractérisé par le fait
que les contenus des deux branches de mémoire (15, 16) sont imprimés en parallèle, l'un à côté de l'autre, comme diagrammes de vitesse et
que l'existence des critères de sauvegarde v = 0 ou a > paramètre de seuil de décélération X déclenche une impression au moins de la date et de l'heure.

8. Dispositif destiné à l'enregistrement de courts trajets selon la revendication 1,
caractérisé par
un appareil de contrôle indépendant du véhicule dans lequel sont prévus le dispositif d'impression et/ou un afficheur, un ordinateur heure/date et des moyens pour l'adaptation à la distance (nombre d'impulsions/mètre) spécifique du véhicule.

9. Dispositif destiné à l'enregistrement de courts trajets selon la revendication 1,
caractérisé par le fait
que l'arrangement de mémoire est intégré dans un enregistreur de route équipé d'un dispositif d'impression selon la revendication 4.
